# EUROPÄISCHE PATENTSCHRIFT

(11) **EP 3 475 495 B1**
(45) Veröffentlichungstag und Bekanntmachung des Hinweises auf die Patenterteilung: **26.02.2020**
(21) Anmeldenummer: 17729123.4
(22) Anmeldetag: 12.06.2017
(51) Int. Cl.: E04B 1/94, D03D 15/00, C09K 21/00, B32B 5/02, B32B 3/06, B32B 5/16, B32B 5/22, B32B 5/30, C09K 21/02, D03D 1/00, D03D 15/12, D03D 27/08, D06N 3/00

(54) **BRANDSCHUTZELEMENT MIT EINEM TRÄGERGEWEBE**
FIRE PROTECTION ELEMENT COMPRISING A BACKING WEB
ÉLEMENT IGNIFUGE COMPRENANT UN TISSU SUPPORT

(30) Priorität: 28.06.2016 EP 16176538
(43) Veröffentlichungstag der Anmeldung: 01.05.2019
(73) Patentinhaber: Hilti Aktiengesellschaft, 9494 Schaan (LI)
(72) Erfinder: FÖRG, Christian, 86862 Dillishausen (DE)
(74) Vertreter: Hilti Aktiengesellschaft Corporate Intellectual Property
(86) Internationale Anmeldenummer: PCT/EP2017/064242
(87) Internationale Veröffentlichungsnummer: WO 2018/001706

(56) Entgegenhaltungen:
- WO-A1-2012/009742
- WO-A1-2012/009742
- WO-A1-2014/116791
- WO-A1-2014/116791
- US-A1- 2008 196 344
- US-A1- 2008 196 344

## Beschreibung

### Technisches Gebiet

Die Erfindung betrifft ein Brandschutzelement mit einem intumeszierenden Material auf einem Trägermaterial zur Abdichtung gegen Hitze und Feuer im Anschlussbereich von Bauelementen, insbesondere Gebäudebauteilen, wie Wände, Decken und Böden.

### Technischer Hintergrund

Zur Brandabschottung und Abdichtung gegen Hitze und Feuer werden in den Anschlussbereich zwischen Bauelementen, insbesondere zwischen Gebäudebauteilen, wie Decken, Wände und Böden, intumeszierende Stoffe eingesetzt. Diese Stoffe weisen häufig ein Trägermaterial aus einem nicht brennbaren Material auf, auf das intumeszierendes Material aufgebracht wird.

Um eine ausreichende Flexibilität eines solchen Brandschutzelements zu erreichen, wird als Trägermaterial häufig ein Faserstoff, Gewebe oder Gelege verwendet. Dabei besteht das Problem, dass sich durch die Temperatureinwirkung im Brandfall das intumeszierende Material von dem Trägermaterial löst. Während im Ausgangszustand das intumeszierende Material auf das Trägermaterial mit Hilfe eines Klebstoffes, wie beispielsweise einem Polymer oder dergleichen, gehalten ist, zersetzt sich dieses jedoch bei hohen Temperaturen, so dass sich bei einem Nachlassen der Intumeszenzwirkung, die bei Einsetzen eines Abbrands des Trägermaterials und des intumeszierenden Materials auftritt, das expandierte intumeszierende Material von dem Trägermaterial löst.

Diesem Effekt wird häufig durch mechanische Einrichtungen entgegengewirkt, die im Brandfall das expandierte intumeszierende Material an der gewünschten Position hält.

Aus der Druckschrift WO 2015/084739 A1 ist eine Verstärkung des intumeszierenden Materials durch ein Gittergewebe bekannt.

Aus der Druckschrift EP 2 455 135 A2 ist ein Brandschutzelement mit einem geschäumten Körper bekannt, der zumindest teilweise aus einem Asche bildenden und gegebenenfalls intumeszierenden Stoffgemisch besteht und wenigstens einem vorgefertigten dünnen und flachen Trägerbauteil, das mit wenigstens einer Flachseite mit dem geschäumten Körper verbunden ist. Insbesondere kann das Trägerbauteil ein Gewebe oder Gelege sein.

In dem obigen Stand der Technik dient das Trägermaterial lediglich als Verstärkung, hat aber durch die offene Gitterstruktur nur eine begrenzte Möglichkeit, die Intumeszenz zu richten.

In der Druckschrift DE 20 2012 001830 U1 ist eine Intumeszenzmasse mit einer Glasfasermatte oder Glasfasergewebe bekannt, das eine Maschenweite von mindestens 0,01 cm aufweist. Weiterhin kann die Glasfasermatte oder das Glasfasergewebe so angeordnet sein, dass dieses unter Einwirkung von Hitze und bei Ausbildung eines Carbonschaums eine Verbindung zwischen Intumeszenzmasse und Carbonschaum herstellen kann. Jedoch ist nicht zu erwarten, dass nach einer vollständigen Umsetzung, d.h. bei Beginn des Abbrands, oder eines Schrumpfens, die Glasfaser- und die Intumeszenzschicht noch aneinanderhaften.

Aus der Druckschrift WO 2014/116791 A1 ist ein Gewebe mit einer Beschichtung bekannt, wobei die Beschichtung ein Bindemittel und ein expandierbares Graphitmaterial aufweist und auf dem Gewebe aufgebracht ist.

Die Druckschrift DE 202 06 644 U1 offenbart ein Brandschutzelement zur Einbringung in einen offenen Querschnitt eines Hohlprofils, wobei mit dem Brandschutzelement eine Brandschutzmasse verbunden ist, die gitterartig und flexibel ausgebildet ist und mit dem Brandschutzelement verhaftet ist.

Die Druckschrift DE 297 22 652 U1 offenbart eine Brandschutzmatte aus einem grobmaschigen Glasfasergewebe als Trägermaterial und aus einer auf das Glasfasergewebe aufgebrachten Beschichtung aus einer Brandschutzmasse, die unter Brandeinwirkung zu einer porösen Trennschicht aufschäumt.

Die beiden letztgenannten Druckschriften offenbaren jeweils ein Gitter, das mit einem intumeszierenden Material versehen ist, wobei das Gitter lediglich eine Art Armierung darstellt, durch die die Kraft der Intumeszenzwirkung nur bedingt in eine Richtung gerichtet werden kann.

Die Druckschrift WO2012009742 offenbart ein Brandschutzelement mit den Merkmalen des Oberbegriffes des Anspruchs 1.

Es ist Aufgabe der vorliegenden Erfindung, ein verbessertes Brandschutzelement mit auf einem Trägermaterial aufgebrachtem Intumeszenzmaterial zur Verfügung zu stellen, bei der eine unter Brandeinwirkung auftretende Intumeszenzwirkung gerichtet ist und bei einem danach erfolgenden Abbrand des Intumeszenzmaterials dieses mit dem Trägermaterial verhaftet bleibt.

### Offenbarung der Erfindung

Diese Aufgabe wird durch das Brandschutzelement nach Anspruch 1 gelöst.

Weitere Ausgestaltungen sind in den abhängigen Ansprüchen angegeben.

Gemäß einem Aspekt ist ein Brandschutzelement vorgesehen, umfassend:
- ein Trägermaterial mit einem Trägergewebe;
- ein auf mindestens eine Oberfläche des Trägermaterials aufgebrachtes Intumeszenzmaterial, dass bei Wärmeeinwirkung längliche Strukturen ausbildet;
wobei das Trägermaterial ein Trägergewebe mit Schlingen aufweist, um die bei Wärmeeinwirkung auftretenden länglichen Strukturen des Intumeszenzmaterials aufzunehmen und mit diesen zu verhaken.

Eine Idee des obigen Brandschutzelements besteht darin, intumeszierendes Material auf ein Trägermaterial aufzubringen, das als Gewebematerial mit Schlaufen ausgebildet ist, in die sich Blähgraphitstrukturen, die durch das Einwirken von Wärme auf das Intumeszenzmaterial entsteht, eingreifen und verhaken können. Die Blähgraphitstrukturen sind längliche, würmchenartige, in der Regel leicht gebogene längliche Strukturen, die bei Wärmeeinwirkung aus Graphitflocken in dem Intumeszenzmaterial entstehen. Durch Anpassung des verwendeten Intumeszenzmaterials an die Schlaufengröße des Gewebematerials wird das Eindringen von freien Enden der Blähgraphitstrukturen in die Schlaufen des Gewebes ermöglicht, so das eine verbesserte Verbindung zwischen dem Gewebematerial und dem expandierten Intumeszenzmaterial erreicht wird.

Die Verbindung zwischen dem zwischen dem Gewebematerial und dem expandierten Intumeszenzmaterial weist auch eine hohe Beständigkeit bezüglich eines Hose-Stream-Tests auf, der für die Bewertung der Brandschutztauglichkeit von Baustoffen eine wichtige Rolle spielt.

Weiterhin weist das Intumeszenzmaterial Graphit in einer Form auf, das bei Wärmeeinwirkung längliche Blähgraphitstrukturen ausbildet.

Es kann vorgesehen sein, dass das Trägergewebe des Trägermaterials als ein Frotteegewebe ausgebildet ist.

Die Schlingen weisen eine durchschnittliche Querschnittsfläche auf, so dass die länglichen Strukturen des Intumeszenzmaterials in die Schlingen eingreifen können.

Insbesondere können die Schlingen eine durchschnittliche Querschnittsfläche aufweisen, die um das 1,5-fache, vorzugsweise um das 3-fache, größer ist als die durchschnittliche Querschnittsfläche der länglichen Strukturen.

Weiterhin kann das Trägermaterial mit einer Armierungsschicht versehen sein, insbesondere auf einer nicht mit dem Intumeszenzmaterial bedeckten Oberfläche.

Gemäß einer Ausführungsform kann das Trägermaterial mit einer Befestigungsschicht, insbesondere einer Klebeschicht versehen sein.

### Kurzbeschreibung der Zeichnungen

Ausführungsformen werden nachfolgend anhand der beigefügten Zeichnungen näher erläutert. Es zeigen:
- Figur 1: eine schematische Darstellung eines Brandschutzelements gemäß einer Ausführungsform;
- Figuren 2a und 2b: eine schematische Darstellung eines Garns aus Glasfasergewebe mit Schlingen und eine vergrößerte fotografische Abbildung eines solchen Garns;
- Figur 3: eine schematische Darstellung der Wirkungsweise einer verbesserten Haftung zwischen dem Trägermaterial und dem Intumeszenzmaterial im Brandfall; und
- Figur 4: eine schematische Darstellung eines weiteren Brandschutzelements gemäß einer weiteren Ausführungsform.

### Beschreibung von Ausführungsformen

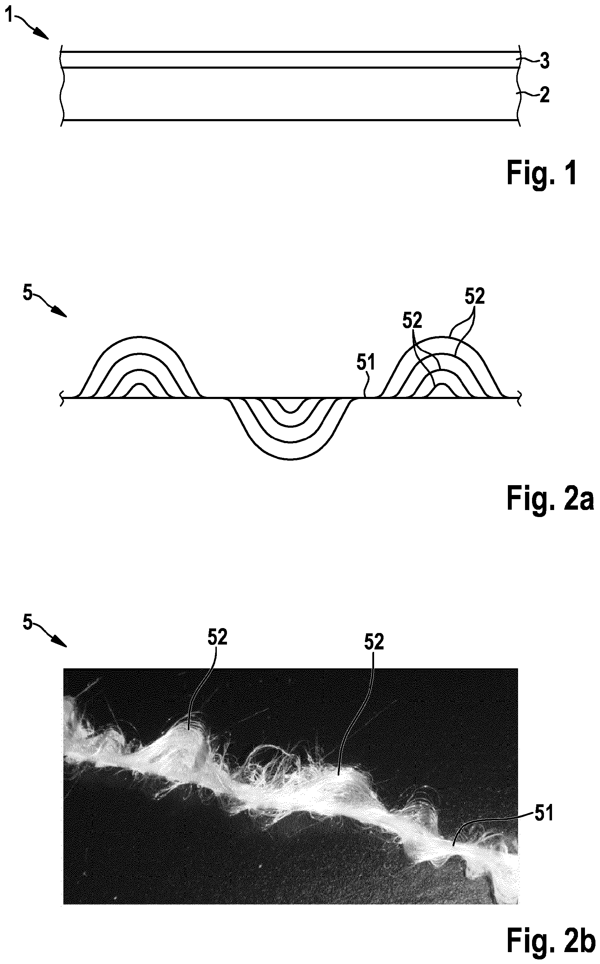

Figur 1 zeigt eine schematische Darstellung des Brandschutzelementes 1 nach einer Ausführungsform der vorliegenden Erfindung. Das Brandschutzelement 1 weist ein im Wesentlichen flächiges Trägermaterial 2 auf, auf das eine Schicht Intumeszenzmaterial 3 aufgebracht ist. Das Trägermaterial 2 ist mit einem Trägergewebe aus Gewebematerial gebildet und weist zumindest an der dem Intumeszenzmaterial zugewandten Oberfläche Schlingen mit hohem Querschnitt auf.

Das Trägergewebe ist vorzugsweise aus einem feuerbeständigen Material, wie beispielsweise aus Glasfasermaterial, ausgebildet. Das Trägergewebe aus Glasfasermaterial wird mit Hilfe eines Glasfasergarns hergestellt, das eine Reihe lockerer Schlingen aufweist, wie es beispielsweise in Figur 2a schematisch und in Figur 2b in einer fotografischen Abbildung gezeigt ist. Dieses Glasfasergarn 5 weist ein Bündel aus einem oder mehreren Basisfäden 51 und eine Vielzahl von Schlingenfäden 52 auf, die in lockerer Weise das Basisfadenbündel umgeben und so Schlingen verschiedenen Querschnitts ausbilden.

Aus einem solchen Glasfasergarn 5 kann nun ein Glasfasergewebe als Trägergewebe ausgebildet werden, das im Wesentlichen eine Struktur aufweist, wie sie bei dem an sich bekannten Frottiergewebe bekannt ist. Mögliche Gewebe, die als Trägergewebe 2 verwendet werden können, sind beispielsweise THS Loomstate, E-Glass Glove mit einem Flächengewicht von 430 g/m² sowie HKO Thermo-E-Glasgewebe PG410 Frottee.

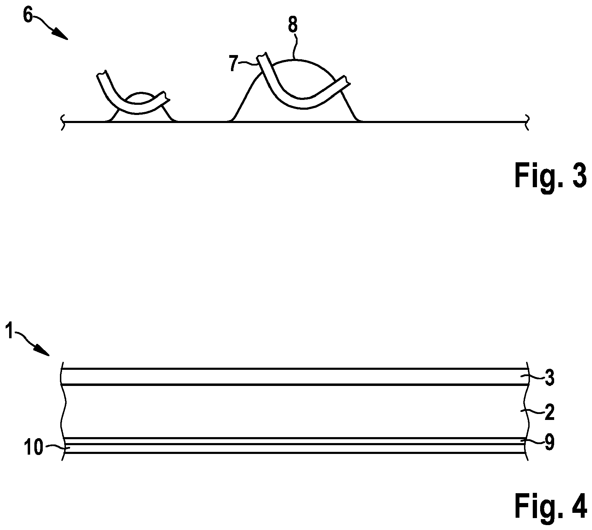

In Figur 3 ist ein Ausschnitt aus dem Brandschutzelement 1 dargestellt, der eine Grenzfläche 6 zwischen dem Intumeszenzmaterial 3 und dem Trägermaterial 2 nach einer Wärmeeinwirkung schematisch darstellt. Das expandierte Intumeszenzmaterial weist Blähgraphitstrukturen 7 auf, die sich würmchenartig länglich erstrecken und sich aus für Intumeszenzmaterialien üblichen Graphitflocken unter Wärmeeinwirkung ausgebildet haben. Das Trägermaterial weist an seiner Oberfläche Schlingen 8 auf. An der Grenzfläche 6 zwischen dem Intumeszenzmaterial 3 und dem Trägermaterial 2 können die ausgebildeten Blähgraphitstrukturen 7 in die Schlingen des Trägergewebes 2 gelangen und sich dort verhaken. Die Blähgraphitstrukturen 7 des expandierten Intumeszenzmaterials 3 greifen auch ineinander, so dass sowohl ein zusammenhängendes Intumeszenzmaterial 3 als auch eine verbesserte Haftung des expandierten Intumeszenzmaterials 3 in den Schlingen des Trägermaterials 2 erreicht wird.

Dieser Effekt bleibt im Gegensatz zu herkömmlichen Brandschutzelementen dieser Art auch bei beginnendem Abbrand des Intumeszenzmaterials 3 erhalten, so dass ein Abfallen der entstehenden Aschekruste reduziert bzw. vollständig unterbunden wird.

Die Größe und Geometrie der Graphitflocken für das Intumeszenzmaterials 3 sind so gewählt, dass die durchschnittliche Querschnittsfläche der Schlingen 8 des Trägergewebes des Trägermaterials 2 größer ist als die durchschnittliche Querschnittsfläche der länglichen Blähgraphitstrukturen 7, so dass diese zu einem ausreichend hohen Anteil sich in den Schlingen 8 verhaken können. Dies wird beispielsweise dadurch erreicht, dass die durchschnittliche Querschnittsfläche der Schlingen 8 größer ist als die Querschnittsfläche der sich ausbildenden Blähgraphitstrukturen 7, vorzugsweise wenigstens größer ist als das 1,5-fache der Querschnittsfläche der sich ausbildenden Blähgraphitstrukturen 7.

Das Trägermaterial kann, wie in Figur 4 dargestellt, auf einer dem Intumeszenzmaterial 3 abgewandten Oberfläche mit einer Armierungsschicht 9 versehen sein, um eine verbesserte Stabilität des Brandschutzelements 1 zu erreichen und im Brandfall eine gerichtete Intumeszenzwirkung in Richtung der dem Intumeszenzmaterial 3 zugewandten Seite zu erreichen. Alternativ oder zusätzlich kann an der dem Intumeszenzmaterial 3 abgewandten Oberfläche des Trägermaterials 3 auch eine Befestigungsschicht 10 in Form einer Klebeschicht oder dergleichen ausgebildet sein.

Das Trägermaterial 2 kann im montierten Zustand auch als Gehäuse dienen, um im Brandfall eine gerichtete Intumeszenzwirkung in Richtung des Inneren des Gehäuses zu erreichen. Bei der Anordnung des Brandschutzelements z.B. um ein Rohr oder dergleichen, kann dadurch die Intumeszenzwirkung in Richtung des Rohrs gerichtet werden.

### Bezugszeichenliste

- 1: Brandschutzelement
- 2: Trägermaterial
- 3: Intumeszenzmaterial
- 5: Glasfasergarn
- 51: Basisfäden
- 52: Schlingenfäden
- 6: Grenzfläche
- 7: Blähgraphitstrukturen
- 8: Schlingen
- 9: Armierungsschicht
- 10: Befestigungsschicht

## Patentansprüche

1. Brandschutzelement (1) umfassend:
- ein Trägermaterial (2) mit einem Trägergewebe;
- ein auf mindestens eine Oberfläche des Trägermaterials (2) aufgebrachtes Intumeszenzmaterial (3), wobei das Intumeszenzmaterial (3) Graphit in einer Form aufweist, das bei Wärmeeinwirkung längliche Blähgraphitstrukturen (7) ausbildet;
wobei das Trägermaterial (2) ein Trägergewebe mit Schlingen (8) aufweist,
**dadurch gekennzeichnet, dass** zumindest ein Teil der Schlingen (8) von dem Trägermaterial (2) in Richtung des Intumeszenzmaterials (3) abstehen und die Schlingen (8) eine durchschnittliche Querschnittsfläche aufweisen, so dass die länglichen Blähgraphitstrukturen (7) in die Schlingen (8) eingreifen können, um die bei Wärmeeinwirkung auftretenden länglichen Strukturen des Intumeszenzmaterials (3) aufzunehmen und mit diesen zu verhaken.

2. Brandschutzelement (1) nach Anspruch 1, wobei das Trägergewebe des Trägermaterials (2) als ein Frotteegewebe ausgebildet ist.

3. Brandschutzelement (1) nach Anspruch 1 oder 2, wobei die Schlingen (8) eine durchschnittliche Querschnittsfläche aufweisen, die um das 1,5-fache, vorzugsweise um das 3-fache, größer ist als die durchschnittliche Querschnittsfläche der länglichen Strukturen.

4. Brandschutzelement (1) nach einem der Ansprüche 1 bis 3, wobei das Trägermaterial (2) mit einer Armierungsschicht (9) versehen ist, insbesondere auf einer nicht mit dem Intumeszenzmaterial (3) bedeckten Oberfläche.

5. Brandschutzelement (1) nach einem der Ansprüche 1 bis 4, wobei das Trägermaterial (2) mit einer Befestigungsschicht (10), insbesondere einer Klebeschicht versehen ist.

## Claims

1. Fire protection element (1) comprising:
- a carrier material (2) comprising a woven carrier fabric;
- an intumescent material (3) applied to at least one surface of the carrier material (2), the intumescent material (3) comprising graphite in a form which forms elongate expandable graphite structures (7) when exposed to heat;
the carrier material (2) comprising a woven carrier fabric having loops (8),
**characterized in that**
at least some of the loops (8) project from the carrier material (2) in the direction of the intumescent material (3) and the loops (8) have an average cross-sectional area such that the elongate expandable graphite structures (7) can engage in the loops (8), in order to receive the elongate structures of the intumescent material (3) which occur when exposed to heat and to hook thereto.

2. Fire protection element (1) according to claim 1, wherein the woven carrier fabric of the carrier material (2) is a terrycloth fabric.

3. Fire protection element (1) according to either claim 1 or claim 2, wherein the loops (8) have an average cross-sectional area which is 1.5 times, preferably 3 times, larger than the average cross-sectional area of the elongate structures.

4. Fire protection element (1) according to any of claims 1 to 3, wherein the carrier material (2) is provided with a reinforcing layer (9), in particular on a surface not covered by the intumescent material (3).

5. Fire protection element (1) according to any of claims 1 to 4, wherein the carrier material (2) is provided with a fastening layer (10), in particular an adhesive layer.

## Revendications

1. Élément coupe-feu (1) comprenant :
- un substrat (2) comportant un tissu-support ;
- un matériau intumescent (3) appliqué sur au moins une surface du substrat (2), le matériau intumescent (3) comprenant du graphite dans un moule et formant des structures allongées en graphite expansé sous l'effet de la chaleur (7) ;
le substrat (2) comprenant un tissu-support comportant des boucles (8),
**caractérisé en ce**
**qu'**au moins une partie des boucles (8) fait saillie du substrat (2) en direction du matériau intumescent (3), et **en ce que** les boucles (8) ont une surface moyenne de section transversale, de sorte que les structures allongées en graphite expansé (7) peuvent venir en prise dans les boucles (8) afin de recevoir les structures allongées du matériau intumescent (3) qui apparaissent sous l'effet de la chaleur, et de s'accrocher sur celles-ci.

2. Élément coupe-feu (1) selon la revendication 1, dans lequel le tissu-support du substrat (2) est réalisé sous forme de tissu-éponge.

3. Élément coupe-feu (1) selon la revendication 1 ou 2, dans lequel les boucles (8) présentent une surface moyenne de section transversale qui est 1,5 fois, de préférence 3 fois, plus grande que la surface moyenne de section transversale des structures allongées.

4. Élément coupe-feu (1) selon l'une des revendications 1 à 3, dans lequel le substrat (2) est doté d'une couche d'armature (9), notamment sur une surface non recouverte avec le matériau intumescent (3).

5. Élément coupe-feu (1) selon l'une des revendications 1 à 4, dans lequel le substrat (2) est doté d'une couche de fixation (10), notamment d'une couche adhésive.
